# EUROPÄISCHE PATENTSCHRIFT

(11) **EP 1 141 055 B1**
(45) Veröffentlichungstag und Bekanntmachung des Hinweises auf die Patenterteilung: **15.12.2004**
(21) Anmeldenummer: 98958864.5
(22) Anmeldetag: 22.10.1998
(51) Int. Cl.: C08F 265/04, C08F 212/00, C08F 220/44

(54) **VERWENDUNG EINES KAUTSCHUKARTIGEN POLYMERS ZUR HERSTELLUNG VON DACHDICHTUNGSBAHNEN**
UTILIZATION OF A RUBBER-LIKE POLYMER FOR PRODUCING ROOF SEALING STRIPS
UTILISATION D'UN POLYMERE DE TYPE CAOUTCHOUC POUR LA FABRICATION DE BANDES D'ETANCHEITE DE TOIT

(43) Veröffentlichungstag der Anmeldung: 10.10.2001
(73) Patentinhaber: Henkel Kommanditgesellschaft auf Aktien, 40589 Düsseldorf (DE)
(72) Erfinder: SIMONIS, Udo, D-63459 Ronneburg (DE); PETERS, Artur, D-27608 Loxstedt (DE)
(86) Internationale Anmeldenummer: PCT/EP1998/006705
(87) Internationale Veröffentlichungsnummer: WO 2000/024794

(56) Entgegenhaltungen:
- EP-A- 0 769 507
- DE-A- 4 419 007

## Beschreibung

Die Erfindung betrifft die Verwendung eines kautschukartigen Polymers zur Herstellung von Dachdichtungsbahnen sowie Dachdichtungsbahnen enthaltend dieses kautschukartige Polymer.

### Stand der Technik

Dachdichtungsbahnen werden im Baubereich insbesondere bei der Abdichtung von Flachdächern, aber auch bei Übergängen zwischen einzelnen Bauteilen eingesetzt. Sie sind dadurch extremen Witterungsbedingungen ausgesetzt, daher werden hohe Anforderungen an die einzusetzenden Materialien gestellt. Sie müssen sowohl gegenüber starken Temperaturschwankungen, als auch Feuchtigkeit, UV-Bestrahlung sowie starkem Wind oder Hagel und Schnee beständig sein. Üblicherweise werden Dachdichtungsbahnen auf Basis von PVC eingesetzt. welche zusätzlich noch einen Weichmacher sowie unterschiedliche Stabilisatoren und Füllstoffe enthalten können. Probleme bestehen bei den aus dem Stand der Technik bekannten Dachdichtungsbahnen bezüglich der Verarbeitbarkeit in der Kälte und insbesondere bezüglich der Witterungsstabilität.

In der EP 769 507 A wird die Herstellung eines kautschukartigen Polymers beschrieben, welches a) Butylacrylat, b) Methylmethacrylat, Ethylmethacrylat, Methylacrylat oder Ethylacrylat, c) Acrylnitril, d) Styrol, e) eine Halb-Ester-Maleat-Seife und f) ein Vernetzungsmittel enthält. Zusammen mit PVC dient es zur Herstellung von lederartigen Produkten mit guten Wärme- und UV-Beständigkeiten. Diese Polymermischung wird hauptsächlich im Innenbereich von Autos eingesetzt. Zusammen mit einem weiteren Polymeren, nämlich Polystyrol, Polyolefine oder Polyamid, kann es zur Herstellung von einer breiten Vielfalt von nützlichen Gegenständen eingesetzt werden, wie z.B. von Profilen, Formstücken, Folien, Bodenbelägen, Wandverkleidungen, Schläuchen, Kabeln und Fußbekleidung.

Die komplexe Aufgabe der vorliegenden Erfindung war es ausgehend von den aus dem Stand der Technik bekannten Dachdichtungsbahnen solche zu entwickeln, die eine deutlich höhere Witterungsstabilität aufweisen und sich gleichzeitig bei unterschiedlichsten Temperaturen gut verarbeiten lassen.

### Beschreibung der Erfindung

Gegenstand der Erfindung ist demnach die Verwendung eines kautschukartigen Polymers bestehend aus den Struktureinheiten
(a) Butylacrylat,
(b) mindestens einem Mitglied ausgewählt aus der Gruppe, die gebildet wird von Methylmethacrylat, Ethylmethacrylat, Methylacrylat und Ethylacrylat,
(c) Acrylnitril,
(d) Styrol,
(e) einer Halbestermaleatseife und
(f) einem Vernetzungsmittel
zur Herstellung von Dachdichtungsbahnen, sowie Dachdichtungsbahnen enthaltend diese Polymere.

Es wurde nun überraschenderweise gefunden, daß durch die Verwendung des oben genannten Polymers in Dachdichtungsbahnen deren Witterungsbeständigkeit deutlich verbessert werden kann und gleichzeitig auch eine gute Verarbeitbarkeit insbesondere in der Kälte erreicht wird. Die erfindungsgemäßen Dachbahnen weisen eine hohe Elastizität und Flexibilität, auch nach langer Bewitterung, auf. Gleichzeitig zeichnen sie sich durch ihre hohe chemische Beständigkeit, insbesondere gegen Öle und Lösungsmittel aus. Zusätzlich konnte eine verbesserte Weichmacherretention festgestellt werden, wodurch die Lebensdauer der Dachdichtungsbahnen deutlich erhöht wird.

Die erfindungsgemäßen Dachdichtungsbahnen enthalten neben dem kautschukartigen Polymer vorzugsweise PVC, grundsätzlich sind jedoch alle aus dem Stand der Technik für Dichtungsbahnen bekannten Materialien geeignet. Weichmacher sowie Stabilisatoren, Füllstoffe und weitere aus dem Stand der Technik bekannte Materialien, die üblicherweise in Dachdichtungsbahnen eingesetzt werden.

### Kautschukartiges Polymer

Das erfindungsgemäß einzusetzende kautschukartige Polymer kann wie in der EP 0 619 328 beschrieben hergestellt werden. Es setzt sich bevorzugt aus (a) 40 bis 80, vorzugsweise 50 bis 80 und insbesondere 55 bis 75 Gew.-% Butylacrylat oder gegebenenfalls einer Mischung von Butylacrylat und 2-Ethylhexylacrylat enthaltend bis zu 40 Gew.-% 2-Ethylhexylacrylat, (b) von 5 bis 35, vorzugsweise von 5 bis 20 Gew.-% mindestens einer Substanz ausgewählt aus der Gruppe bestehend aus Methylmethacrylat, Ethylmethacrylat, Methylacrylat oder Ethylacrylat (c) von 4 bis 30 vorzugsweise 6 bis 30, insbesondere 10 bis 25 Gew.-% Acrylnitril, (d) von 3 bis 25 vorzugsweise 5 bis 18, insbesondere 8 bis 14 Gew.-% Styrol, (e) von 0,5 bis 8, vorzugsweise 1 bis 5, insbesondere 2 bis 4 Gew.-% einer Maleathalbesterseife und von 0,25 bis 8, vorzugsweise 0.5 bis 4, insbesondere 1 bis 3 Gew.-% eines Vernetzungsmittels zusammen.

Besonders bevorzugt ist der Einsatz des unter dem Handelsnamen Sunigum® von Goodyear vertriebenen kautschukartigen Polymers. In den erfindungesgemäßen Dachbahnen wird das Polymer in Mengen von 1 bis 30, vorzugsweise 5 bis 20 und insbesondere 8 bis 15 Gew.-% eingesetzt.

### Polyvinylchlorid

Erfindungsgemäß werden bevorzugt Dachbahnen aus PVC eingesetzt, mit einem Gehalt von vorzugsweise 20 bis 70, insbesondere 30 bis 55 Gew.-% PVC.

### Weichmacher

Als Weichmacher können die üblichen aus dem Stand der Technik bekannten mit PVC verträglichen Weichmacher eingesetzt werden. Typische Weichmacher sind beispielsweise Derivate der Sylvinsäure oder Essigsäurederivate wie beispielsweise Cumylphenylacetat, Derivate der Adipinsäure wie Benzyloctyladipat, Dibutyladipat, Diisobutyladipat. Di-(2-ethylhexyl)adipat, Diisononyladipat, Derivate der Azelainsäure, Benzoesäurederivate, Polyphenylderivate, Zitronensäurederivate, epoxidierte Fettderivate, Glycolderivate, sowie die übrigen in der EP-B1 0 619 328 auf Seite 5 und 6 aufgeführten Weichmacher.

Besonders bevorzugt werden Adipinsäurepolyester als Weichmacher eingesetzt, insbesondere im Gemisch mit epoxidierten Triglyceriden, vorzugsweise epoxidiertem Sojaöl.

Weichmacher sind üblicherweise in den Dachdichtungsbahnen in Mengen von 15 bis 65, vorzugsweise 20 bis 45 Gew.-% enthalten.

### Stabilisatoren

Zur Erhöhung der Thermostabilität der Dachdichtungsbahnen können zusätzlich aus dem Stand der Technik bekannte Wärmestabilisatoren wie z.B. Pb-Stabilisatoren und/ oder Ba/Zn-Stabilisatoren vorzugsweise Ca/Zn-Stabilisatoren enthalten sein. Daneben können auch zusätzlich noch UV-Stabilisatoren enthalten sein, wie beispielsweise Oxalanilide, Amide, Titandioxid, Ruß, insbesondere Tinovin® und/ oder Chimasorp® . Üblicherweise sind die Stabilisatoren jeweils in Mengen von 0.01 bis 10, vorzugsweise 0,1 bis 5 Gew.-% enthalten. Üblicherweise übersteigt die Gesamtmenge an Stabilisatoren nicht 20 Gew.-% der Mischung.

### Füllstoffe

Als Füllstoffe können die Dachbahnen die üblichen aus dem Stand der Technik bekannten Füllstoffe enthalten, wie beispielsweise Kreide, Talkum oder Kieselsäuren, besonders bevorzugt ist jedoch Kaolin als Füllstoff. Die Menge an Füllstoffen beträgt 0,5 bis 15, bevorzugt 1 bis 10 Gew.-%.

Daneben können noch weitere übliche Inhaltsstoffe enthalten sein, wie beispielsweise Gleitmittel, vorzugsweise Ca-Stearat, Verarbeitungshilfsmittel, Gelierhilfen, UV-Wandler oder Biozide wie beispielsweise Thiazolinderivate, Tributylzinn, Chlorisothiazolin oder Oxybisphenoxyarsen, besonders bevorzugt sind Isothiazolinderivate.

## Patentansprüche

1. Verwendung eines kautschukartigen Polymers bestehend aus den Struktureinheiten
(a) Butylacrylat,
(b) mindestens einem Mitglied ausgewählt aus der Gruppe, die gebildet wird von Methylmethacrylat, Ethylmethacrylat, Methylacrylat und Ethylacrylat,
(c) Acrylnitril,
(d) Styrol,
(e) einer Halbestermaleatseife und
(f) einem Vernetzungsmittel
zur Herstellung von Dachdichtungsbahnen.

2. Verwendung nach Anspruch 1, **dadurch gekennzeichnet, daß** die Dachdichtungsbahnen zusätzlich Polyvinylchlorid und einen Weichmacher enthalten.

3. Verwendung nach den Ansprüchen 1 und 2, **dadurch gekennzeichnet, daß** die Dachdichtungsbahnen weiterhin einen UV- und Thermostabilisator sowie einen Füllstoff enthalten.

4. Dachdichtungsbahnen bestehend aus (A) einem kautschukartigen Polymer gemäß Anspruch 1, (B) Polyvinylchlorid, (C) einem Weichmacher, (D) einem Füllstoff und (E) Stabilisatoren.

## Claims

1. The use of a rubber-like polymer consisting of the structural units
(a) butyl acrylate,
(b) at least one member from the group consisting of methyl methacrylate, ethyl methacrylate, methyl acrylate and ethyl acrylate,
(c) acrylonitrile,
(d) styrene,
(e) a semiester maleate soap and
(f) a crosslinking agent
for the production of roof sealing strips.

2. The use claimed in claim 1, **characterized in that** the roof sealing strips additionally contain polyvinyl chloride and a plasticizer.

3. The use claimed in claims 1 and 2, **characterized in that** the roof sealing strips additionally contain a UV stabilizer, a heat stabilizer and a filler.

4. Roof sealing strips consisting of (A) a rubber-like polymer according to claim 1, (B) polyvinyl chloride, (C) a plasticizer, (D) a filler and (E) stabilizers.

## Revendications

1. Utilisation d'un polymère de type caoutchouc constitué des unités de structure suivantes :
(a) acrylate de butyle,
(b) au moins un membre choisi dans le groupe formé par le méthacrylate de méthyle, le méthacrylate d'éthyle, l'acrylate de méthyle et l'acrylate d'éthyle,
(c) acrylonitrile,
(d) styrène,
(e) un savon de semi-ester maléate et
(f) un agent réticulant
pour la fabrication de bandes d'étanchéité de toit.

2. Utilisation selon la revendication 1, **caractérisée en ce que** les bandes d'étanchéité de toit contiennent en outre du poly(chlorure de vinyle) et un plastifiant.

3. Utilisation selon les revendications 1 et 2, **caractérisée en ce que** les bandes d'étanchéité de toit contiennent en outre un stabilisant UV et un stabilisant thermique ainsi qu'une charge.

4. Bandes d'étanchéité de toit constituées par (A) un polymère de type caoutchouc selon la revendication 1, (B) du poly(chlorure de vinyle), (C) un plastifiant, (D) une charge et (E) des stabilisants.
